# EUROPEAN PATENT APPLICATION

(11) **EP 0 995 927 A2**
(43) Date of publication of application: **26.04.2000**
(21) Application number: 99305210.9
(22) Date of filing: 01.07.1999
(51) Int. Cl.: F16F 13/10

(54) **Vibration damping assemblies**

(30) Priority: 23.10.1998 GB 9823109
(71) Applicant: DRAFTEX INDUSTRIES LIMITED, Edinburgh EH2 3AP, Scotland (GB)
(72) Inventor: Chauvet, Ludovic, 44470 Mauves-sur-Loire (FR); Fort, Patrice, 44470 Thouare-sur-Loire (FR); Souyri, Philippe, 44470 Carquefou (FR)
(74) Representative: Foster, David Martyn

(57) **Abstract**

A hydroelastic engine mount comprises a conically-shaped hollow rubber support (10) extending between an armature (14) for securing to a vehicle body, and a fixture (12) for securing to the engine. The hollow interior of the support (10) defines a working chamber (22) which is filled with hydraulic fluid and is in communication with a compensation chamber (36) via a conduit (38). Vibrations of the engine are partially damped by the rubber support (10). Further damping is provided by the damping effect imposed on movement of the hydraulic fluid in the conduit (38), particularly according to the resonant frequency applied to the hydraulic fluid within the conduit. The conduit (38) incorporates a slidable element (74) having a through passageway (76). At relatively low vibration amplitudes, the sliding element (74) is carried to and fro along the conduit by the moving fluid and has substantially no effect; damping is dependent on the dimensions of the conduit (38) itself. However, when the sliding element (74) is held stationary within the conduit (38), the to and fro movement of the fluid includes movement through the passageway (76), the dimensions of which now substantially determine the damping characteristics.

## Description

The invention relates to a vibration damping assembly for damping relative vibrations between two rigid members, comprising means confining a body of hydraulic fluid which is caused to move to and fro along a conduit, in dependence on the vibrations, the conduit having separately operative different dimensional characteristics which provide respectively different damping effects on the fluid movement along the conduit and correspondingly different damping effects on the vibrations.

The invention also relates to a hydroelastic engine mount for damping relative vibrations between the engine of a vehicle and the body of a vehicle, comprising a rigid armature for connection to one of the engine and the vehicle body, a rigid fixing element for attachment to the other of the engine and the body, resilient support material of generally conical shape extending between the armature and the rigid fixing element for resiliently flexing in response to and for damping vibrations between the armature and the fixing element, a first chamber defined in part by and within the resilient support material, a second flexible-walled chamber, and a conduit interconnecting the two chambers whereby hydraulic fluid can be passed through the conduit between the two chambers in response to resilient flexing of the resilient support material such that its to and fro movement through the conduit damps the vibrations, the conduit having separately operative dimensional characteristics which provide respectively different damping effects on the fluid movement along the conduit and correspondingly different damping effects on the vibrations.

Such an assembly and such an engine mount are shown, for example, in GB-A-2 186 052 and GB-A-2-191 561. In these arrangements, the conduit comprises orifices which can be individually selected and which have variable sizes. Such arrangements are relatively complex in construction and operation and can only operate when controlled by external means. The invention aims to provide an arrangement which does not require a plurality of orifices, which is simple in construction and which can operate without external means.

According to the invention, the assembly as first set forth above is characterised by a fluid control element slidable along and within the conduit between its two ends such that, when the control element slides in substantial correspondence with the to and fro movement of the fluid within the conduit, a first one of the dimensional characteristics is determined by the dimensions of the conduit and, when the control element is fixed against movement within the conduit, a second one of the dimensional characteristics is determined by the dimensions of a passageway permitted by the control element when so fixed.

According to the invention, the engine mount as first set forth above is characterised by a slidable element slidable within and between the two ends of the conduit and having a through passageway such that, when the slidable element is freely slidable within the conduit in dependence on the to and fro movement of the hydraulic fluid therein, damping of the to and fro movement of the hydraulic fluid through the conduit is primarily dependent on the dimensional characteristics of the conduit, and, when the slidable element is held stationary within the conduit such that the to and fro movement of the hydraulic fluid within the conduit includes movement thereof through the passageway, the damping applied to the to and fro movement of the hydraulic fluid within the conduit is primarily dependent on the dimensions of the passageway.

Vibration damping assemblies embodying the invention, and in the form of engine mounts for use in motor vehicles, will now be described, by way of example only, with reference to the accompanying diagrammatic drawings in which:
Figure 1 is a cross-section through one of the engine mounts;
Figure 2 is an enlarged and schematic view of a fluid conduit in the engine mount of Figure 1; and
Figure 3 corresponds to Figure 2, but shows the fluid conduit in a particular operative configuration.

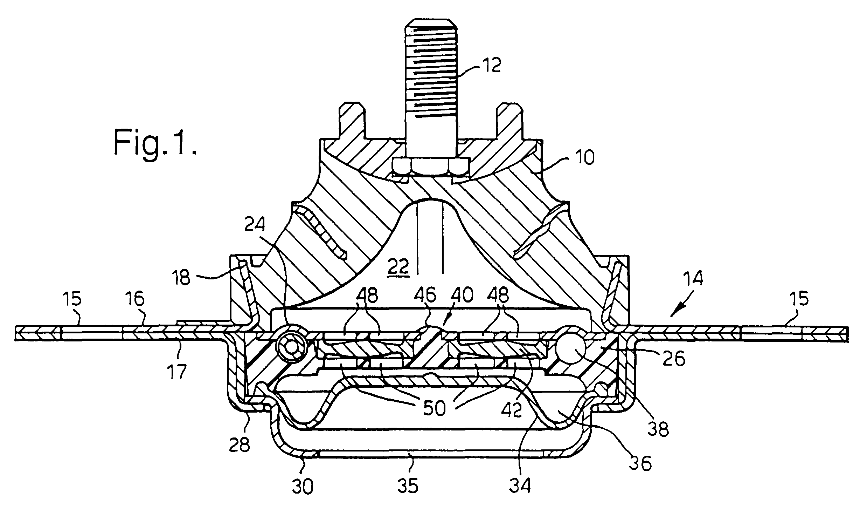

As shown in Figure 1, the engine mount comprises a support 10 made of stiff rubber material which is mounted between the engine of the vehicle and the vehicle body. The support 10 is generally frusto-conical in shape. Its upper end is fast with a metal stud 12 by means of which an attachment is made to the engine of the vehicle. The base of the support 10 is connected to a metal platform or armature 14 which is attached to the vehicle body by means of bolts (not shown) secured through holes 15. The armature 14 comprises plates 16 and 17. The upper plate 16 is centrally apertured and the metal surrounding this aperture is upturned as shown at 18 and embedded in the rubber of the support 10.

In this way, therefore, the engine of the vehicle is connected to the vehicle body by means of the stiff rubber support 10, which provides a resilient connection and helps to isolate engine vibrations from the vehicle body. In addition, however, the support assembly provides hydraulic damping as will now be explained.

The hollow interior of the support 10 provides a generally conically shaped chamber ("working chamber") 22, containing a suitable hydraulic fluid, such as water containing anti-freeze. The base of the working chamber 22 is defined by a plate 24 which is held in position by a valve body 26 made of stiff material, such as plastics material. The valve body 26 is in turn held in position by a flange 28 surrounding an aperture in the lower plate 17 of the armature 14. The flange 28 also supports a metal cover 30 and a flexible membrane 34. The metal cover 30 is apertured at 35. A compensation chamber 36 is defined between the flexible membrane 34 and the underside of the valve body 26.

Two means of interconnection between the working and compensation chambers 22,36 are provided. The first of these interconnection means is via a helical or circular conduit 38 which is connected at one end to the working chamber 22 and at its other end to the compensation chamber 36; the connections between the conduit 38 and the two chambers are not shown.

The second interconnection means between the chambers 22 and 36 is provided by a valve assembly 40. The valve assembly incorporates a flexible disc valve 42 supported on a central boss 44 which is part of the valve body 26. The disc 42 can flex, with a limited degree of movement, within a valve chamber 46. The valve chamber 46 is connected to the working chamber 22 by apertures 48 and is connected to the compensation chamber 36 by apertures 50.

In use, vibrations of the engine relative to the body are partly damped by the resilience and stiffness of the rubber support 10. In addition, however, the support 10 acts as a piston or pump on the fluid within the working chamber 22. If the vibrations are of relatively high amplitude and relatively low frequency, the liquid is pumped to and fro between the working chamber 24 and the compensation chamber 36 through the conduit 38. The pressure in the compensation chamber 36 is maintained constant and substantially equal to atmospheric pressure, because of the flexibility of the membrane 34 and the connections to the ambient atmosphere via the apertures 35. Therefore, the compensation chamber 36 produces substantially no resistance to the fluctuating liquid movement. Damping is achieved by oscillation of the liquid mass in the conduit 38 which acts as a dynamic damper. Maximum damping is obtained at the resonant frequency which depends on the characteristics (its length and crosssection, in particular) of the conduit 38.

During such relatively high amplitude vibrations, the disc valve 42 is held substantially in a fixed position by the pressure of the fluid and there is therefore substantially no transfer of fluid pressure between the working and compensation chambers 22,36 via the valve assembly 40.

When the engine vibrations have relatively low frequency and relatively low amplitude (for example, when the engine is running at idling speed), there is little or no movement of the liquid through the conduit 38. However, the disc valve 42 is able to vibrate in response to such low-amplitude vibrations and thus provides a pressure interconnection between the chambers 22 and 36 and therefore reduces the pressure in the working chamber 22 towards atmospheric pressure. The effective stiffness of the support assembly is thus reduced and transmission of vibrations from the engine to the vehicle body is correspondingly reduced.

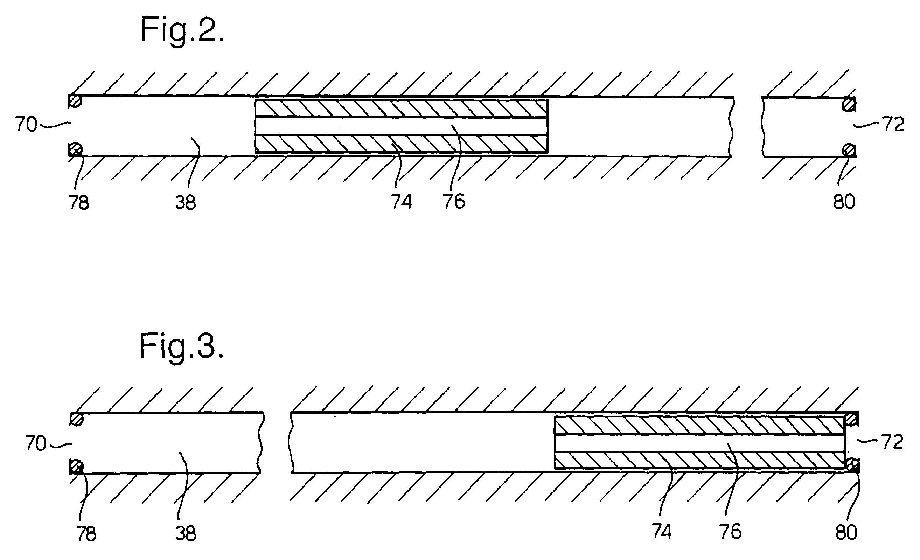

As stated above, under certain conditions of amplitude and frequency of the vibrations, the hydraulic liquid is pumped to and fro between the working chamber 24 and the compensation chamber 36 through the conduit 38, and the characteristics of the conduit affect the amount of damping produced by the conduit in dependence on the resonant frequency of the conduit in response to the passage of fluid through it. The conduit 38 in the engine mount of Figure 1 will now be described in more detail with particular reference to Figure 2. Figure 2 shows the conduit 38 in schematic form - thus, it is shown as extending in a straight line for ease of illustration, between an opening 70 connecting it to the working chamber 22 and an opening 72 connecting it to the compensation chamber 36; in fact, of course, and as explained above, it is circular or helical.

As shown in Figure 2, the conduit 38 includes also a sliding element 74 having a through bore 76. The sliding element 74 has an external diameter less than the internal diameter of the conduit 38 and is made of suitable material, such as hard plastics material, so that it can slide freely within the conduit 38. As shown in Figure 2, the length of the element 74 is a substantial proportion of the length of the conduit 38. In practice, the length of the element 74 would be relatively reduced. In addition, the element 74 would not normally be rectilinear but would be curvilinear to match the curvature of the conduit 38, so as to enable it to slide freely between the two ends of the conduit 38.

Adjacent each of the openings 70,72 of the conduit 38, respective annular seals 78 and 80 are provided for a purpose to be explained.

When the vibrations of the engine relative to the vehicle body have a relatively low amplitude and a relatively high frequency, the hydraulic liquid, while it is pumped to and fro through the conduit 38 between the working and compensation chambers 22,36, will cause the slider 74 to move substantially freely in a corresponding to and fro direction. Therefore, the slider 74 has substantially no effect on the liquid. In other words, the liquid, in moving to and fro between the two chambers, is affected substantially only by the characteristics of the conduit 38 itself - in particular, its length and cross-sectional area which determine its resonant frequency for the moving liquid. The conduit 38 is dimensioned so that this resonant frequency has a relatively high value, at which it produces maximum damping effect. Therefore, at idling speeds of the engine, when the engine vibrations have a relatively low amplitude, the conduit 38 produces little damping effect on the liquid - but produces a greater damping effect at higher frequencies of vibration.

However, when the amplitude of the vibrations is relatively high, the effect will be to cause the slider 74 to move into contact with one of the ends of the conduit 38 and to remain in such contact. Thus, it will move into position shown in Figure 3, where one end of the slider 74 abuts against the sealing ring 80. The hydraulic liquid, in moving between the working and compensation chambers, must therefore flow through the bore 76. The resonant frequency applied to the moving liquid is thus substantially dependent on the length and cross-sectional area of the bore 76 through the slider 74. The bore 76 is dimensioned to produce a lower resonant frequency than that of the conduit 38 itself. Therefore, maximum damping is produced at lower frequencies.

In this way, therefore, an engine mount is produced which provides two different frequencies at which maximum damping is achieved, in dependent on the amplitudes of the vibrations.

The arrangement described above is controlled automatically by the amplitude of the vibrations. However, in a modification, the position of the slider 74 could be controlled in some other way. For example, if the slider 74 is made of, or incorporates, suitable magnetic material, it could be electromagnetically controlled from outside the canal 38 so as to be settable into a position in which it is freely slidable within the canal 38 or is held at a fixed position. If it is freely slidable, then the effective resonant frequency for the hydraulic fluid is determined by the characteristics of the canal 38 itself. If the slider 74 is held fixed, then the effective resonant frequency will be determined largely by the characteristics of the slider 74. It is not of course necessary for the slider 74 to be held stationary at one of the ends of the canal 38.

Instead of using electromagnetic means, any other suitable way of selectively holding the slider 74 stationary can be used.

Although the effective resonant frequency applied to the liquid when the slider 74 is stationary will be determined primarily by the dimensional characteristics of the slider, it will also be partly dependent, of course, on the dimensions of the conduit 38 itself.

## Claims

1. A vibration damping assembly for damping relative vibrations between two rigid members, comprising means (22, 36) confining a body of hydraulic fluid which is caused to move to and fro along a conduit (38), in dependence on the vibrations, the conduit (38) having separately operative different dimensional characteristics which provide respectively different damping effects on the fluid movement along the conduit (38) and correspondingly different damping effects on the vibrations, characterised by a fluid control element (74) slidable along and within the conduit (38) between its two ends (70, 72) such that, when the control element slides in substantial correspondence with the to and fro movement of the fluid within the conduit (38), a first one of the dimensional characteristics is determined by the dimensions of the conduit (38) and, when the control element (74) is fixed against movement within the conduit (38), a second one of the dimensional characteristics is determined by the dimensions of a passageway (76) permitted by the control element (74) when so fixed.

2. An assembly according to claim 1, characterised in that the second of the two dimensional characteristics is operative when the control element (74) is held against one or other of the two ends (70, 72) of the conduit (38) in response to amplitudes of the to and fro movement of the hydraulic fluid within the conduit exceeding a predetermined value.

3. An assembly according to claim 2, characterised in that the control element (74) comprises a slider (74) axially slidable along the conduit (38) with the passageway (76) extending substantially axially therethrough, and by an aperture (70,72) at each end of the conduit (38) through which the fluid can move, the slider (74) moving into abutment with one or other of the ends (70,72) of the conduit (38) in response to to and fro movement of the fluid exceeding the predetermined amplitude so that the fluid is constrained to pass through the passageway (76).

4. An assembly according to claim 3, characterised by sealing means (78,80) around each aperture for sealing between the slider (74) and that end of the conduit (38).

5. An assembly according to claim 1, characterised by control means selectively operative to permit and to prevent movement along the conduit (38) of the fluid control element (74).

6. An assembly according to claim 5, characterised in that the control means comprises electromagnetic means energisable from outside the conduit (38) for permitting and preventing movement of the fluid control element (74) along the conduit (38).

7. An assembly according to any preceding claim, characterised in that the means confining the body of hydraulic fluid comprises means defining two flexible-walled chambers (22, 36) containing hydraulic fluid with the conduit (38) extending therebetween.

8. An assembly according to claim 7, characterised by a stiff resilient support (10) for mounting between the two rigid members and resiliently flexing in response to and partially damping the vibrations between the two rigid members, the wall of one of the chambers (22) flexing correspondingly.

9. An assembly according to claim 8, characterised in that the support (10) is made of hollow resilient material which at least partially defines the said one chamber (22).

10. An assembly according to claim 8 or 9, characterised in that the flexible wall (34) of the other chamber (36) is subject to ambient atmospheric pressure.

11. A hydroelastic engine mount for damping relative vibrations between the engine of a vehicle and the body of a vehicle, comprising a rigid armature (12) for connection to one of the engine and the vehicle body, a rigid fixing element (14) for attachment to the other of the engine and the body, resilient support material (10) of generally conical shape extending between the armature (12) and the rigid fixing element (14) for resiliently flexing in response to and for damping vibrations between the armature (12) and the fixing element (14), a first chamber (22) defined in part by and within the resilient support material (10), a second flexible-walled chamber (36), and a conduit (38) interconnecting the two chambers (22, 36) whereby hydraulic fluid can be passed through the conduit (38) between the two chambers (22, 36) in response to resilient flexing of the resilient support material (10) such that its to and fro movement through the conduit (38) damps the vibrations, the conduit (38) having separately operative different dimensional characteristics which provide respectively different damping effects on the fluid movement along the conduit (38) and correspondingly different damping effects on the vibrations, characterised by a slidable element (74) slidable within and between the two ends (70, 72) of the conduit (38) and having a through passageway (76) such that, when the slidable element (74) is freely slidable within the conduit (38) in dependence on the to and fro movement of the hydraulic fluid therein, damping of the to and fro movement of the hydraulic fluid through the conduit (38) is primarily dependent on the dimensional characteristics of the conduit (38), and, when the slidable element (74) is held stationary within the conduit (38) such that the to and fro movement of the hydraulic fluid within the conduit (38) includes movement thereof through the passageway (76), the damping applied to the to and fro movement of the hydraulic fluid within the conduit (38) is primarily dependent on the dimensions of the passageway (76).

12. An engine mount according to claim 11, characterised in that the slidable element (74) is held stationary against one or other of the two ends (70,72) of the conduit (38) in response to amplitudes of the to and fro movement of the hydraulic fluid within the conduit (38) exceeding a predetermined value.

13. An engine mount according to claim 12, characterised in that the slidable element (74) moves into abutment with one or other of the ends (70,72) of the conduit (38) in response to to and fro movement of the fluid exceeding the predetermined amplitude so that the fluid is then constrained to pass through the passageway (76).

14. An engine mount according to claim 13, characterised by sealing means (78,80) for sealing between the slidable element (74) and each end of the conduit (38).

15. An engine mount according to claim 11, characterised by control means selectively operative to permit and to prevent movement along the conduit (38) of the slidable element (74).

16. An engine mount according to claim 15, characterised in that the control means comprises electromagnetic means energisable from outside the conduit (38) for permitting and preventing movement of the slidable element (74) along the conduit (38).
